Europäisches Patentamt

European Patent Office

Office européen des brevets

(19)

(11) Veröffentlichungsnummer: **0 062 281**
**B1**

(12) # EUROPÄISCHE PATENTSCHRIFT

(45) Veröffentlichungstag der Patentschrift:
**05.12.84**

(51) Int. Cl.³: **H 04 N 5/13**, H 01 J 9/44

(21) Anmeldenummer: **82102662.2**

(22) Anmeldetag: **30.03.82**

(54) **Verfahren und Vorrichtung zur Ermittlung der Farbreinheits- und der Konvergenzkorrekturgrösse auf einem Farbfernseh-Bildschirm vom In-Line-Typ mit magnetischen Ablenkmitteln.**

(30) Priorität: **03.04.81 DE 3113454**

(43) Veröffentlichungstag der Anmeldung:
**13.10.82 Patentblatt 82/41**

(45) Bekanntmachung des Hinweises auf die Patenterteilung:
**05.12.84 Patentblatt 84/49**

(84) Benannte Vertragsstaaten:
**DE FR IT NL**

(56) Entgegenhaltungen:
**US - A - 3 723 801**
**US - A - 4 193 086**
**US - A - 4 211 960**

(73) Patentinhaber: **International Standard Electric Corporation, 320 Park Avenue, New York New York 10022 (US)**

(84) Benannte Vertragsstaaten: **FR IT NL**

(73) Patentinhaber: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Kienle, Erhard, Gollenstrasse 30, D-7300 Esslingen (DE)**

(74) Vertreter: **Thul, Leo, Dipl.-Phys. et al, Kurze Strasse 8 Postfach 300 929, D-7000 Stuttgart 30 (DE)**

## Beschreibung

Die Erfindung betrifft ein im Oberbegriff des Patentanspruchs 1 bezeichnetes Verfahren und Vorrichtungen zu seiner Durchführung.

Farbbildröhren vom In-Line-Typ haben im Röhrenhals drei in einer Ebene angeordnete Elektronenstrahlerzeugersysteme, deren Strahlen sich in der Entfernung einer vor dem Leuchtschirm befindlichen Schattenmaske überkreuzen. Nach dem Durchtritt durch die Schlitze dieser Schattenmaske laufen die Strahlen dann wieder auseinander und treffen dadurch getrennt auf die jeder Schlitzreihe zugeordneten Leuchtstoffstreifen bei Rot, Grün oder Blau auf. Somit kann man die Systeme und ihre Strahlen nach den Farben bezeichnen, welche sie auf dem Bildschirm anregen. Die Genauigkeit, mit der sich die Rot- Grün- und Blaustrahlen in der Entfernung der Schlitzmaske überschneiden und dann gemäss ihrer Richtung auf die zugeordneten Leuchtstoffstreifen des Schirmes treffen, ist infolge von Herstelltoleranzen nicht immer ausreichend. Zur nachträglichen Korrektur sind deshalb Einstellmittel vorgesehen, mit denen an der fertigen Röhre nachjustiert werden kann. Dabei wird vorzugsweise im Zentrum des Bildschirmes zuerst die Richtung eines Elektronenstrahles so eingestellt, dass er den ihm zugeordneten Leuchtfarbenstreifen in der gewünschten Lage trifft. Nach dieser sogenannten Farbreinheitseinstellung werden die Rot und Blau erzeugenden Aussenstrahlen mit dem für Grün eingestellten Mittenstrahl zur Deckung gebracht, was man als Konvergenzeinstellung bezeichnet. Diese wird mit Hilfe eines Gitterrasters aus dem Bildschirm ermöglicht, wobei mangelhafte Einstellung durch vom Grünraster abweichend positionierte Rot- bzw. Blauraster erkennbar ist. Um die drei Raster zu einem weissen Raster genau übereinanderzustellen, werden die Rot- und Blauaussenstrahlen von magnetischen Feldern, welche sich in der Nähe des Elektronenstrahlerzeugersystems befinden, in die geeignete Lage gebracht. Die zur Korrektur verwendeten Magnetfelder werden von Einstellmitteln, u.a. von sogenannten Mehrpoleinheiten entweder ausserhalb des Röhrenhalses erzeugt oder auch von magnetisierbarem Material im Elektronenstrahlsystem selbst aufgebracht. Im ersten Fall werden mehrpolig magnetisierte Ringe gegeneinander verdreht, im zweiten Fall wird ein dauermagnetischer Werkstoff von aussen her abschnittsweise oder gemeinsam mit der erforderlichen Polarisierung versehen.

Exakte Rasterdeckung manuell mit diesen Einstellmitteln zu erreichen, erfordert Geschicklichkeit und dauert vergleichsweise lang. Das erzielte Ergebnis ist auch, und je nach der verwendeten Einrichtung, vom subjektiven Eindruck und der Erfahrung des Ausführenden, sowie von der jeweiligen Bildröhre und deren Einstelldaten abhängig.

Es ist nun Aufgabe der Erfindung, ein Messverfahren zur Erfassung der objektiven Einstelldaten anzugeben, um eine objektive Einstellung zu erreichen und damit ausserdem, z.B. zum Zweck der Fertigungsbeobachtung, die Abweichungen der produzierten Röhren laufend genau registriert werden können.

Die Lösung dieser Aufgabe wurde verschiedentlich durch eine Vielzahl von Sensoren, auch wie in DE-A1-2 741 465 beschrieben, durch ein ganzes Feld von Sensoren vor der Mitte der Bildschirmfläche, versucht. Mittels Auswerteschaltungen hat man Informationen über Lage und Koinzidenzen der angeregten Leuchtschirmbereiche gewonnen, ausgehend von dem Flächenmuster der Sensorfelder für Rot, Grün und Blau. Die Auswertung ist, wie das Sensorfeld selbst, dabei sehr aufwendig, insbesondere dann, wenn sie ausreichend schnell geschehen soll.

Nachteilig ist bei Verwendung von Sensorfeldern auch, dass die Auflösung nur bis herab zur Zellengrösse möglich ist, also von den Abmessungen des Sensors abhängt. Wird eine Glasfasermatrix verwendet, so ist die Auflösung zwar ausreichend, der Aufwand für die vielfache Zahl von Sensoren jedoch untragbar hoch.

Erfindungsgemäss ist die Aufgabe nach dem im Kennzeichenteil der Ansprüche 1 und 2 beschriebenen Verfahren und mit der im Anspruch 3 genannten Vorrichtung gelöst. Die Ansprüche 2 bis 6 enthalten vorteilhafte Weiterbildungen. Es wird, um mit je einem rot-, grün- und blauempfindlichen Sensor für die Beleuchtungsstärke auszukommen, dabei aber trotz dieses geringen Aufwandes eine schnelle Auswertung und eine ausreichende Auflösung zu erreichen, für die Ermittlung der winkelrichtigen Inzidenz der Elektronenstrahlen (Farbreinheit) der Intensitätsverlauf der Leuchtstärke ermittelt, und um das Ausmass der Konvergenz der Strahlen (Rasterdeckung) zu erfassen, wird die zeitliche Aufeinanderfolge des Hindurchtretens der Strahlen durch denselben Maskenschlitz ausgewertet. Dies ist möglich, weil die Ablenkung alle drei Strahlen zeitgleich behandelt und die am Gitter des In-Line-Systems eingetasteten Signale gleichzeitig auf alle Strahlen einwirken. Dabei wird der Mittenstrahl als Synchron-Bezugsstrahl für die Aussenstrahlen verwendet.

Gemäss der Erfindung wird davon ausgegangen, dass die räumliche Konvergenz der durch die Ablenkfelder bewegten Strahlen mit ihrer zeitlichen Koinzidenz zwangsläufig verbunden ist.

Zur Ermittlung der Farbreinheitskorrekturgrösse für den Mittenstrahl oder auch der Aussenstrahlen wird ein senkrecht zur Bewegungsebene der Elektronenstrahlen verlaufender Spalt von mindestens der Breite des Schlitzabstandes der Schattenmaske vor dem Bildschirm in dessen Mitte angebracht. Die so ausgeblendete Leuchtstärke wird von drei farbempfindlichen Sensoren (Photoelement, Photodiode, Photo-Multiplier usw.) aufgenommen. Dadurch kann für jede Farbe die Helligkeit quantitativ entsprechend dem realen Zeitverlauf erfasst werden.

Durch Einstellung von Strömen in einer gleichgepolten Zweispulengruppe, deren wirksame Achse senkrecht zum Strahlerzeugungssystem steht und die über dem Hals-Konus-Bereich der Röhre oder über dem Strahlerzeugungssystem angeordnet ist, wird für den Mittenstrahl der gewünschte Verlauf der Leuchtstärke eingestellt. Der farbreine Mittenstrahl steht dann als Synchron-Bezug für die Aussenstrahlen zur Verfügung.

Konvergenz muss zweidimensional, schirmbezogen waagrecht und senkrecht, also in x- und y-Richtung eingestellt werden, weshalb es üblich ist, mit Rastern zu justieren. Nach der Erfindung jedoch dient auch zur Ermittlung der Konvergenzkorrekturgrösse ein schmaler Spalt, jeweils senkrecht zur Ablenkebene.

Es ist bei geeigneter Beschaltung möglich, zur Ermittlung der Grössen für Farb- und Konvergenz-Korrektur denselben Spalt zu verwenden, wobei für die y-Korrektur der Spalt um 90° gedreht wird.

Für die Korrektur-Ermittlung der beiden Aussenstrahlen relativ zu dem in der Mitte liegenden Bezugsstrahl, kann das Korrekturmass gewonnen werden, indem über dem System aussen am Röhrenhals, zwei gegengepolte Zweispulengruppen von vorzugsweise rechteckiger Form angebracht werden, wobei eine Gruppe parallel oder senkrecht, die andere um ca. 45° geneigt zum Strahlerzeugungssystem angeordnet wird.

Die Verstellung der Lage der Aussenstrahlen zwecks Gewinnung des Korrekturmasses als Höhe des zur Korrektur erforderlichen Ablenkstromes kann auch mit Hilfe von Mehrspulengruppen vorgenommen werden, welche drei oder mehr Spulenpaare enthalten. Dabei ist vorteilhaft, dass sich die Strahlbeeinflussung der Aussenstrahlen auch richtungsgleich durchführen lässt.

Während sich erfindungsgemäss bei diesen Verfahren hinter der Blendenöffnung gemäss den zu beobachtenden Farben, entsprechende farbempfindliche Sensoren befinden, kann man nach einer weiteren Ausbildung der Erfindung nur einen farbneutralen Sensor anwenden, wenn nämlich die Information über die eingeschaltete Farbe einer Elektronik auf direktem Wege zugeleitet wird.

Für die Positionierung der Sonden und der Sondenspalte ist die maximale Ablage und die Maskenstruktur massgebend. In beiden Beziehungen werden die Anforderungen an die Lagegenauigkeit erfindungsgemäss dadurch gemildert, dass ein zur Ablenkrichtung senkrechtes zusätzliches Feld mit im Vergleich zum Ablenkfeld hoher Frequenz zur Hilfe genommen wird. Aus der linienförmigen Leuchtspur der Strahlen entstehen ausreichend breite Bänder, wodurch mehrere Schlitzreihen für den Sondenort d.h. der Lage der Schlitzblende gleichermassen verwendbar werden.

Der Ablauf des Verfahrens und die Verwendung der Vorrichtungen wird dazu im folgenden anhand der Figuren erläutert.

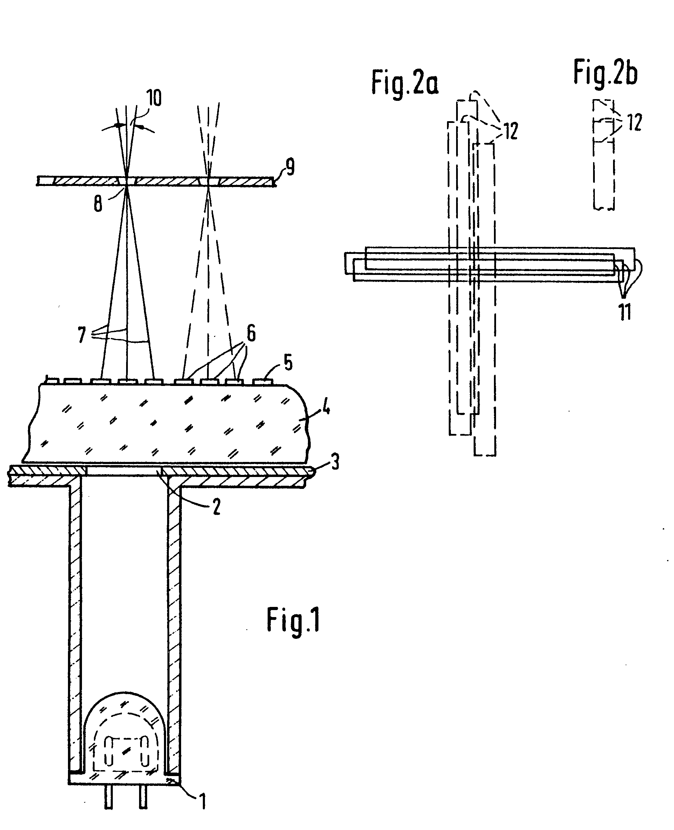

Fig. 1 zeigt schematisch die Anordnung des Sensors 1 hinter dem Spalt 2 in Blende 3, vor dem Bildschirm 4 mit der Leuchtschicht 5. Auf die Leuchtstreifen 6 der Leuchtschicht 5 treffen die drei Elektronenstrahlen 7. Gegenüber jedem Schlitz 8 der Schattenmaske 9 befindet sich eine der Leuchtstreifen-Dreiergruppen mit je einem Streifen für Rot, Grün und Blau. Infolge ihres unterschiedlichen Inzidenzwinkels 10 (Farbauswahlwinkel) treffen bei richtiger Einstellung die Strahlen für Rot, Grün und Blau auf die betreffenden Leuchtstreifen.

Fig. 2 zeigt je drei vor der Einstellung der Koinzidenzkorrektur noch nicht deckungsgleiche Leuchtflächen von ca. 3 bis 9 cm Länge und ca. 3 bis 9 mm Breite in der Mitte eines Bildschirmes. Nachdem die drei roten, grünen und blauen Leuchtflächen 11 in x-Richtung zur Deckung gebracht worden sind, geht man von der waagrechten Ablenkung zur senkrechten Auslenkung der Elektronenstrahlen in y-Richtung über und bringt die verschiedenfarbigen Leuchtflächen auch bei 12 zur Überdeckung, bis der gesamte Streifenrand weiss erscheint.

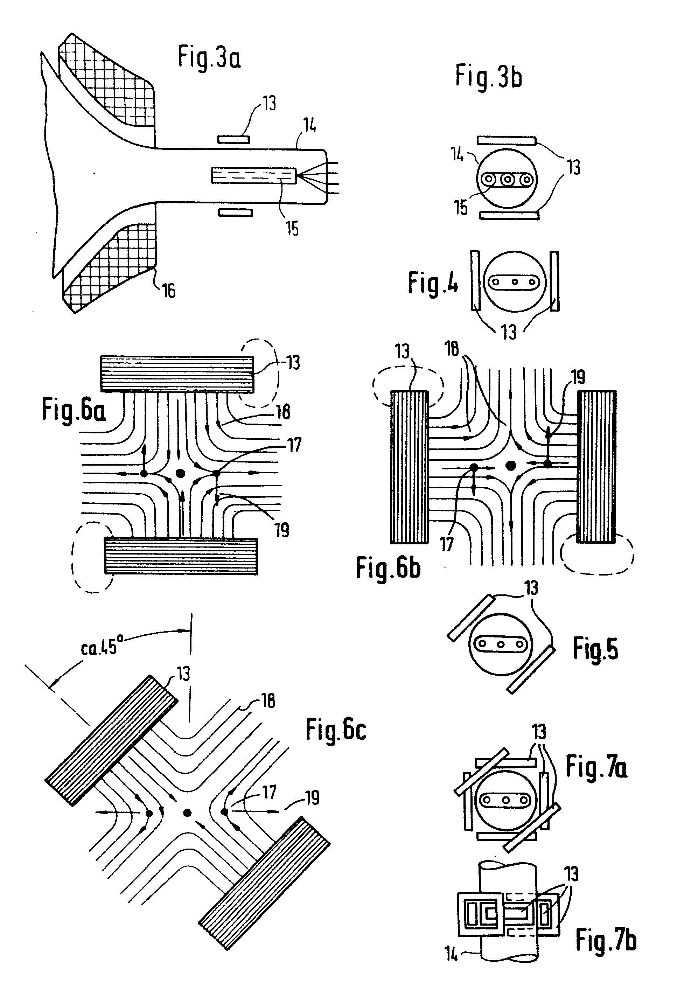

Fig. 3 zeigt die Zweispulengruppe 13 über dem Hals der Bildröhre 14, das Elektronenstrahlerzeugersystem 15 und die der Röhre zugeordnete Ablenkeinheit 16. Die Spulenstellung ist so, dass Strahlkorrekturablenkung der Aussenstrahlen in senkrechter Richtung (y-Richtung) zustandekommt, wenn die Spulen gegensinnig gepolt sind.

Fig. 4 zeigt die Zweispulengruppe 13 mit waagrechter Achse zum Strahlerzeugersystem. Bei gegensinniger Polung werden die Aussenstrahlen durch den Strom in senkrechter Richtung (y-Richtung) ausgelenkt.

Fig. 5 zeigt die Zweispulengruppe um ca. 45° gedreht, so dass die Aussenstrahlen in waagrechter Richtung (x-Richtung) abgelenkt werden, wenn Strom in den beiden Spulen gegensinnig fliesst.

Fig. 6 zeigt den Zusammenhang von Spulenlage, Spulenpolung und Ablenkrichtung in einer Ebene senkrecht zu den Elektronenstrahlen 17. Den resultierenden Feldverlauf verdeutlichen die Linien 18. Der Pfeil 19 bezeichnet die entsprechende Änderungsrichtung der Strahllage.

Fig. 7 zeigt eine Mehrpolspuleneinheit mit 3 Zweispulengruppen in einer Anordnung, bei welcher die Spulengruppen 13 in Umfangsrichtung ineinandergeschachtelt sind. Es kann dann das Spulenpaar mit mit senkrechter Achse zur Ermittlung der Farbreinheitskorrektur dienen, wobei die Polung der beiden Spulen so gewählt ist, dass die Magnetfelder gleichgerichtet sind.

Die Spulenpaare mit waagrechter und 45° geneigter Lage dienen dabei entsprechend zur Erfassung der Korrekturgrössen für Konvergenz in y- bzw. x-Richtung. Sind die Stromrichtungen in allen Spulen umpolbar, so ist das Spulenpaar mit waagrechter Achse entbehrlich.

Zuerst wird mit der Einstellung der Ströme in einer gleichgepolten Zweispulengruppe 13 in Fig. 3b für den Mittenstrahl Farbreinheit eingestellt, d.h. der Farbauswahlwinkel wird korrigiert bis die gewünschte Lage des Elektronenstrahles auf dem Farbstreifen, z.B. Mittenlage, erreicht wird und somit der Sensor den entsprechenden zeitlichen Intensitätsverlauf wiedergibt.

Dann erfolgt die sogenannte Rasterdeckungseinstellung. Die Strahlen müssen nämlich nicht nur auf die zugehörigen Farbstreifen treffen, sondern auch auf die Farbstreifen derselben Leuchtstreifengruppe, d.h. sie müssen gleichzeitig durch dieselben Maskenschlitze 8 fallen (s.a. Fig. 1). Dies wird wiederum durch die Ströme in Spulen eingestellt und der Betrag und die Richtung der Ströme geben die Grösse der auszugleichenden Ablage an. Als Kriterium für die räumliche Konvergenz aller drei Strahlen in Höhe der Schlitzmaske 9 dient die zeitliche Koinzidenz. Beobachtet wird erfindungsgemäss der Unterschied in den Zeiten des Eintreffens der beiden Seitenstrahlen (rot und blau) im Vergleich zum Mittenstrahl (grün) in der Öffnung 2 der Blende 3. Die Signale des Sensors 1 bzw. von drei Sensoren übereinander an der Stelle von 1 für die drei Farben, werden für den Betrachter dazu ausgewertet. Synchronität aller Strahlen bedeutet vollständige Kongruenz der Leuchtflächen 11 bzw. 12 (Fig. 2) und ist damit gleichwertig mit der früher durch subjektive Rasterbeobachtung eingestellten Rasterdeckung. Gegenüber dem subjektiven Einstellverfahren ist die objektive Messung der für Synchronismus jeweils erforderlichen Korrektur-Spulenströme in den Zwei- oder Mehrspulengruppen mit geringem Aufwand (vor allem an Sensoren) möglich und die Messung kann schnell und sehr genau ausgeführt werden.

Zur Zeitmessung werden alle drei Strahlen gleichzeitig (bei Verwendung von drei farbempfindlichen Sensoren) oder zyklisch (wenn nur ein farbneutraler Sensor vorhanden ist, und der Elektronik anderweitig mitgeteilt wird, welcher Strahl eingeschaltet ist) hellgetastet. Die Zeitlage der Sensorsignale wird zuerst für die x-Richtung durch gegengepolte Spulen gemäss Fig. 5c und dann in y-Richtung durch gegengepolte Spulen entsprechend Fig. 5b eingestellt.

Als Sensoren können in bekannter Weise Photodioden, Photoelemente, Photomultiplier usw. verwendet werden. Während des gesamten Messvorganges werden die Strahlen zusätzlich quer zur Hauptablenkung mit einer hohen Frequenz abgelenkt, damit nicht nur Linien, sondern die Leuchtflächen 11 und 12 geschrieben werden, was die Positionierung der Sonden entsprechend erleichtert.

## Patentansprüche

1. Verfahren zur Ermittlung der Farbreinheits- und der Konvergenzkorrekturgrössen auf einem Farbfernseh-Bildschirm vom In-Line-Typ mit magnetischen Ablenkmitteln, dadurch gekennzeichnet, dass zur Ermittlung der Abweichungen von der winkelrichtigen Inzidenz der Elektronenstrahlen (Farbreinheit) die Messung des von den drei Elektronenstrahlen (7) auf den zugehörigen Leuchtstoffstreifen (6) hinter einem Maskenschlitz oder einer -schlitzreihe erzeugten Intensitätsverlaufs der Farbhelligkeit dient und die Ablage von der entfernungsrichtigen Koinzidenz (Rasterdeckung) durch die Abweichung der drei Elektronenstrahlen vom synchronen Hindurchtreten durch denselben Maskenschlitz oder dieselbe Schlitzreihe als Zeitunterschied zwischen den Beleuchtungen der zugehörigen Leuchtstoffstreifen gemessen wird und der Durchgang des Mittenstrahles dabei der Synchronbezugswert für die Aussenstrahlen ist.

2. Verfahren nach Anspruch 1, dadurch gekennzeichnet, dass die Abweichung vom richtigen Intensitätsverlauf und dem synchronen Beleuchten kompensiert wird mittels magnetischer Ablenkung der Elektronenstrahlen und die dazu in den Ablenkspulen erforderlichen Stromwerte die Korrekturgrösse darstellen.

3. Vorrichtung zur Durchführung des Verfahrens nach Anspruch 1 und 2, dadurch gekennzeichnet, dass für die Ermittlung der erforderlichen Grösse der Korrekturen ein senkrecht zur Bewegungsebene der Elektronenstrahlen (7) verlaufender Spalt (2) von mindestens der Breite des in der Bewegungsrichtung der Elektronenstrahlen gemessenen Schlitzreihenabstandes vorzugsweise in der Mitte des Bildschirmes angeordnet ist, hinter welchem sich ein oder mehrere lichtempfindliche Sensoren (1) befinden und zur Ablenkung der Elektronenstrahlen von der Strahlenablenkschaltung unabhängige Stromkreise vorhanden sind, welche für die Farbreinheitskorrektur Strom durch eine gleichgepolte Zweierspulengruppe leiten, deren Achse senkrecht steht auf der Ebene, in welcher die Elektronenstrahlen erzeugt werden, und für die Konvergenzkorrektur Strom wahlweise durch zwei gegengepolte Zweierspulengruppen leiten, deren Achsen 45° und 0° oder 90° gegen die Ebene der Elektronenstrahlerzeugung gelagert sind, wobei die Zweierspulengruppen über dem Strahlerzeugersystem (15) ausserhalb des Röhrenhalses (14) in Form langgestreckter rechteckiger Wickelspulen (13) in Umfangsrichtung ineinandergeschachtelt sind.

4. Vorrichtung nach Anspruch 3, dadurch gekennzeichnet, dass an den aussen auf den vorzugsweise in der Mitte des Bildschirmes angeordneten Spaltblenden am Ort des Spaltes farbempfindliche Sensoren fest mit der Blende verbunden sind.

5. Vorrichtung nach Anspruch 3, dadurch gekennzeichnet, dass an der Stelle des Blendenspaltes ein farbneutraler Sensor angeordnet ist.

6. Vorrichtung nach Anspruch 3, dadurch gekennzeichnet, dass zusätzlich eine oder mehrere Ablenkspulen vorhanden sind, welche ein Feld senkrecht zum jeweils vorhandenen Haupt-Ablenkfeld erzeugen und dass ein Generator diese Spulen mit einem Strom versorgt, dessen Frequenz ein Vielfaches der Haupt-Ablenkfrequenz ist.

## Claims

1. Method of determining colour-purity and convergence-correcting quantities on the screen of an in-line colour-picture tube comprising magnetic deflection means, characterised in that deviations from the correct angles of incidence of the electron beams (colour purity) are determined by measuring the luminance distribution produced by the three electron beams (7) on the associated phosphor stripes (6) behind a mask slit or a row of mask slits, and that deviations from coincidence (convergence) are determined by measuring the deviation of the three electron beams from their synchronous passage through the same mask slit or the same row of slits as the time difference between the illuminations of the associated phosphor stripes, the instant of the passage of the centre beam being the reference value for the synchronisation of the outer beams.

2. A method as claimed in Claim 1, characterised in that deviations from the correct luminance distribution and synchronous illumination are compensated for by magnetically deflecting the electron beams, and that the current values necessary therefor in the deflection coils are the correcting quantities.

3. Device for carrying out the method claimed in Claims 1 and 2, characterised in that, to determine the necessary correcting quantities, a slit (2) extending perpendicular to the plane of movement of the electron beams (7) and having a width at least equal to the spacing of the rows of mask slits measured in the direction of movement of the electron beams is provided preferably at the centre of the screen, behind which slit are disposed one or more photosensors (1) and that, to deflect the electron beams, circuits indenpendent of the deflection circuit are provided which, for colour-purity correction, pass current through a similar poled two-coil group whose axis is normal to the plane in which the electron beams are generated, and, for convergence correction, pass current through either of two oppositely poled two-coil groups whose axes are inclined to the electron-beam-generation plane at 45° and 0° or 90°, the two-coil groups consisting of elongated, rectangular coils (13) fitted within one another in the circumferential direction above the beam-generating system outside the tube neck (14).

4. A device as claimed in Claim 3, characterised in that colour-sensitive sensors are located behind the slit and permanently connected with the slit diaphragm disposed on the outside, preferably at the centre, of the screen.

5. A device as claimed in Claim 3, characterised in that one neutral sensor is located behind the slit.

6. A device as claimed in Claim 3, characterised in that, in addition one or more deflection coils are provided which produce a field perpendicular to the respective existing main deflecting field, and that a generator supplies these coils with a current whose frequency is a multiple of main sweep frequency.


**Revendications**

1. Procédé d'établissement des grandeurs de correction de pureté de couleur et de convergence sur un écran de tube pour images de télévision en couleurs, du type «in line», avec déviation magnétique, caractérisé en ce que la mesure de la distribution de l'intensité de la couleur produite par chacun des trois faisceaux d'électrons (7) sur les bandes (6) de luminophore correspondantes, derrière une fente d'un masque ou une rangée de fentes, sert à définir les écarts des faisceaux d'électrons par rapport à l'incidence angulaire correcte (pureté de couleur), et en ce que l'écart de position par rapport à la coïncidence à distance correcte (convergence) est mesuré par l'écart des trois faisceaux d'électrons par rapport au passage synchrone au travers de la même fente de masque ou de la même rangée de fentes, sous forme de différence de temps entre les éclairements des bandes de luminophore correspondantes, le passage du faisceau médian étant la valeur de référence de synchronisme pour les faisceaux externes.

2. Procédé selon la revendication 1, caractérisé en ce que l'écart par rapport à la distribution d'intensité correcte et à l'éclairement synchrone est compensé par le moyen d'une déviation magnétique des faisceaux d'électrons, les valeurs de courant nécessaires pour cela dans des bobines de déviation représentant les grandeurs de correction.

3. Dispositif de mise en oeuvre du procédé selon les revendications 1 et 2, caractérisé en ce que, pour définier la grandeur que les corrections doivent avoir, une fente (2) s'étendant perpendiculairement au plan du mouvement des faisceaux d'électrons (7) et ayant au moins la largeur de l'intervalle des rangées de bandes mesuré dans la direction du mouvement des faisceaux d'électrons, est agencée de préférence dans le milieu de l'écran, un ou plusieurs senseurs photosensibles (1) se trouvant derrière cette fente, et en ce que des circuits de courant indépendants du circuit de déviation des faisceaux électroniques sont prévus pour dévier aussi ces faisceaux électroniques, ces circuits de courant conduisant, pour la correction de pureté de couleur, un courant passant par un groupe de deux bobines de même polarité dont l'axe est perpendiculaire au plan dans lequel les faisceaux d'électrons sont engendrés, et conduisant, pour la correction de convergence, un courant sélectivement dans deux groupes de deux bobines à polarités antagonistes, dont les axes sont disposés à 45° et à 0° ou 90° par rapport au plan des faisceaux d'électrons, les groupes consistant en deux bobines (13) rectangulaires et oblongues agencées par-dessus le système (16) producteur de faisceaux, à l'extérieur du col (14) du tube et mutuellement imbriqués en direction périphérique.

4. Dispositif selon la revendication 3, caractérisé en ce que des senseurs chromatosensibles sont agencés derrière la fente et associés de façon permanente au diaphragme à fente agencé extérieurement, de préférence au milieu de l'écran.

5. Dispositif selon la revendication 3, caractérisé en ce qu'un senseur chromatiquement neutre est agencé à l'emplacement de la fente de diaphragme.

6. Dispositif selon la revendication 3, caractérisé en ce qu'il comprend en outre une ou plusieurs bobines de déviation qui produisent un champ perpendiculairement au champ de déviation principal existant dans chaque cas, et en ce qu'un générateur alimente ces bobines avec un courant dont la fréquence est un multiple de la fréquence de balayage principale.

Fig.2a

Fig.2b

Fig.1

Fig.3a

13

14

15

16

Fig.3b

14

13

15

Fig.4

13

Fig.6a

13

18

17

19

Fig.6b

13

18

19

17

ca.45°

13

18

Fig.6c

17

19

Fig.5

13

Fig.7a

13

13

Fig.7b

14